# EUROPEAN PATENT SPECIFICATION

(11) **EP 2 103 510 B1**
(45) Date of publication and mention of the grant of the patent: **25.07.2012**
(21) Application number: 09002487.8
(22) Date of filing: 21.02.2009
(51) Int. Cl.: B62J 11/00

(54) **Bicycle accessory device**
Fahrradzubehörvorrichtung
Dispositif d'accessoire de bicyclette

(30) Priority: 21.03.2008 TW 97110034
(43) Date of publication of application: 23.09.2009
(73) Proprietor: Giant Manufacturing Co., Ltd, Taichung Hsien (TW)
(72) Inventor: Yang, Chao-Shun, Tainan City (TW)
(74) Representative: Leifert, Elmar

(56) References cited:
- DE-A1- 10 245 474
- DE-U1- 29 815 886
- DE-U1-202004 007 599
- FR-A1- 2 628 378
- JP-A- 9 226 652

## Description

This invention relates to a bicycle, and more particularly to a bicycle accessory device that includes an accessory (such as a tail lamp, a mudguard, or a rear carrier rack), a clamp, and a fastening unit cooperating with the clamp to lock the accessory on a bicycle frame.

A bicycle and an accessory assembly according to the preambles of claims 1 and 9 are shown in the document FR2628378.

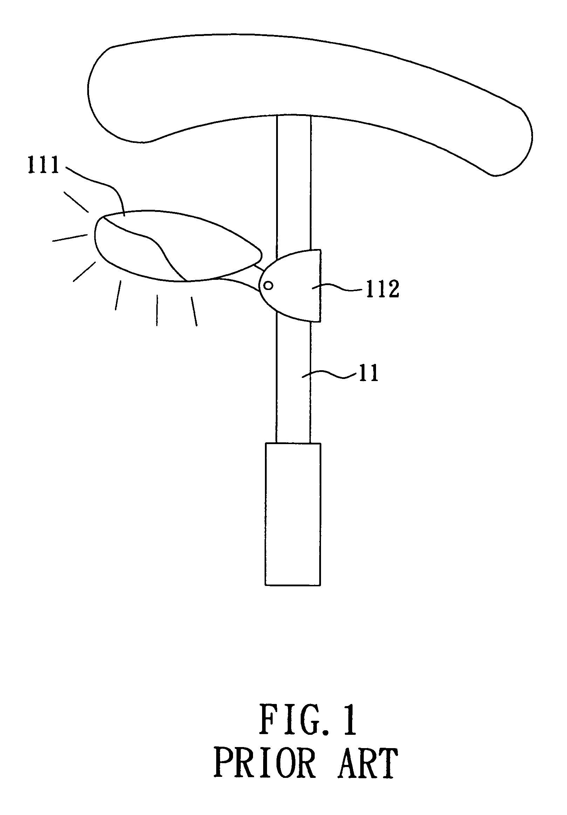

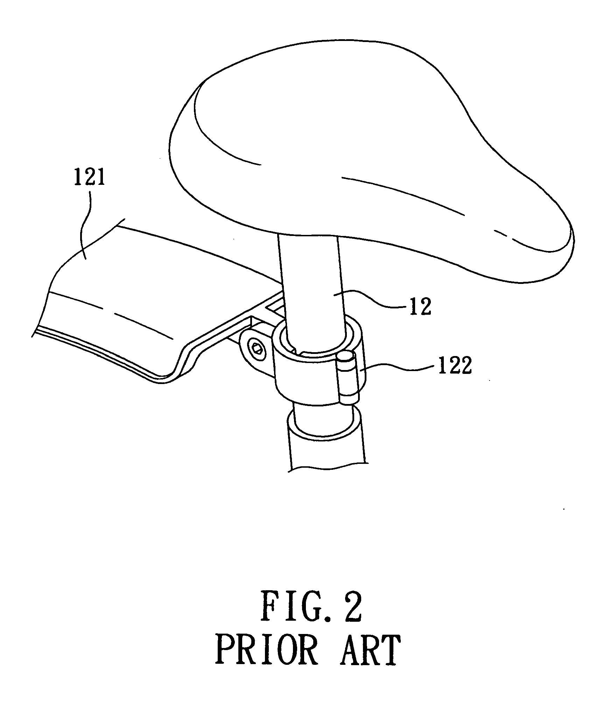

Referring to Fig. 1, a tail lamp 111 is mounted on a seat tube 11 by a clamp 112. Referring to Fig. 2, a mudguard 121 is mounted on a seat tube 12 by a clamp 122. When either of the clamps 112, 122 is loosened slightly from the seat tube 11, 12 after a period of use, a corresponding one of the tail lamp 111 and the mudguard 121 moves or pivots relative to the seat tube 11, 12.

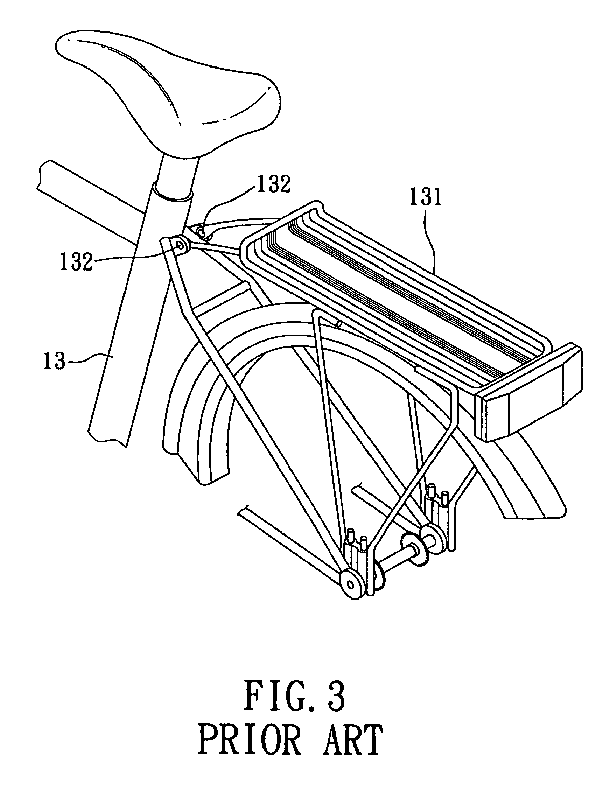

Referring to Fig. 3, a rear carrier rack 131 is mounted on a seat tube 13 by two lock bolts 132. When the rear carrier rack 131 is assembled to the seat tube 13, damage may be caused to the outer surface of the seat tube 13 by the lock bolts 132, thereby affecting adversely the appearance of the seat tube 13.

The object of this invention is to provide a bicycle accessory assembly that can overcome the above-mentioned disadvantages associated with the prior art.

Accordingly, the bicycle accessory assembly of this invention is mounted to inner and outer tubes of a bicycle frame. The outer tube is sleeved on the inner tube. The bicycle accessory assembly includes a clamp, an accessory, and a fastening unit. The clamp includes a sleeve portion sleeved on the outer tube, and first and second clamp ears connected respectively to two ends of the sleeve portion. The accessory has a connecting portion and an abutment portion. The fastening unit extends through the connecting portion and the first and second clamp ears along an axis. The fastening unit is operable to move the first clamp ear toward and away from the second clamp ear. The abutment portion is in contact with the inner tube and a top end of the outer tube.

Since the clamp is sleeved on the outer tube, and since the abutment portion of the accessory is in contact with the inner tube and the top end of the outer tube, when the clamp is loosened slightly from the outer tube after a period of use, pivoting and moving of the accessory relative to the inner tube can be prevented. Furthermore, when the fastening unit is configured as a lock bolt, it is not in contact with the inner and outer tubes, and, thus, cannot damage the same.

These and other features and advantages of this invention will become apparent in the following detailed description of the preferred embodiments of this invention, with reference to the accompanying drawings, in which:
Fig. 1 is a schematic side view of a bicycle tail lamp mounted to a seat tube by a clamp;
Fig. 2 is a schematic perspective view of a bicycle mudguard mounted to a seat tube by a clamp;
Fig. 3 is a schematic perspective view of a bicycle rear carrier rack mounted to a seat tube by two lock bolts;
Fig. 4 is an exploded top perspective view of the first preferred embodiment of a bicycle accessory device according to this invention;
Fig. 5 is an assembled bottom perspective view of the first preferred embodiment mounted to inner and outer tubes;
Fig. 6 is a partly sectional view of the first preferred embodiment, and the inner and outer tubes;
Fig. 7 is a fragmentary schematic side view of the first preferred embodiment, and the inner and outer tubes;
Fig. 8 is a partly sectional view of the second preferred embodiment of a bicycle accessory device according to this invention mounted to inner and outer tubes;
Fig. 9 is a fragmentary side view of the second preferred embodiment, and the inner and outer tubes;
Fig. 10 is a schematic perspective view of a clamp and a connecting portion of an accessory of the second preferred embodiment, illustrating engaging slots and engaging ribs;
Fig. 11 is a partly sectional view of the third preferred embodiment of a bicycle accessory device according to this invention; and
Fig. 12 is a fragmentary schematic side view of the third preferred embodiment, and the inner and outer tubes.

Before the present invention is described in greater detail in connection with the preferred embodiments, it should be noted that similar elements and structures are designated by like reference numerals throughout the entire disclosure.

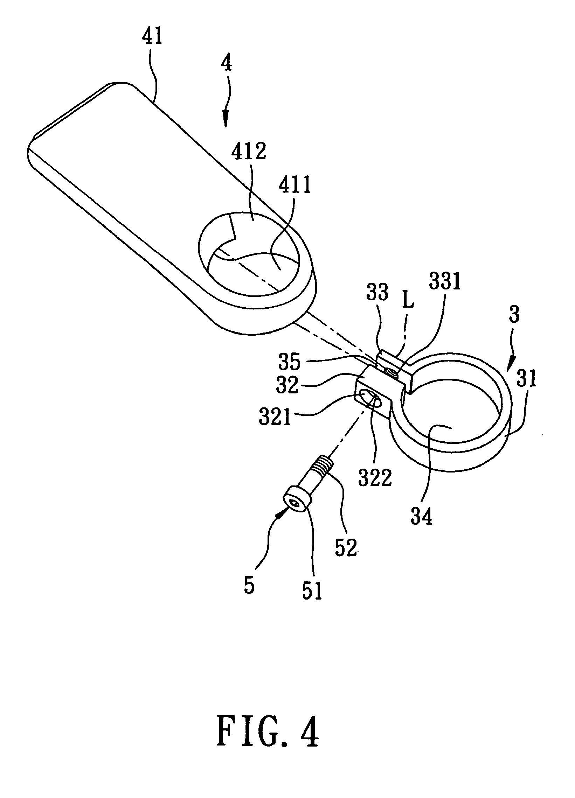

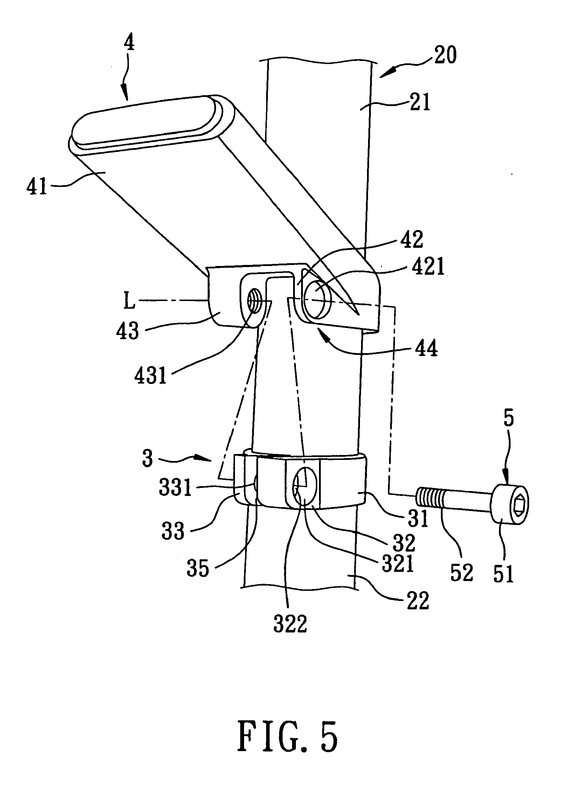

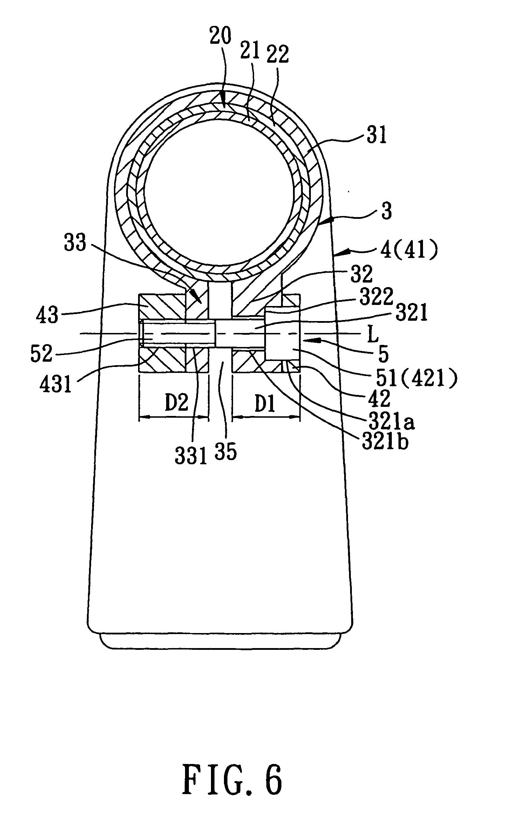

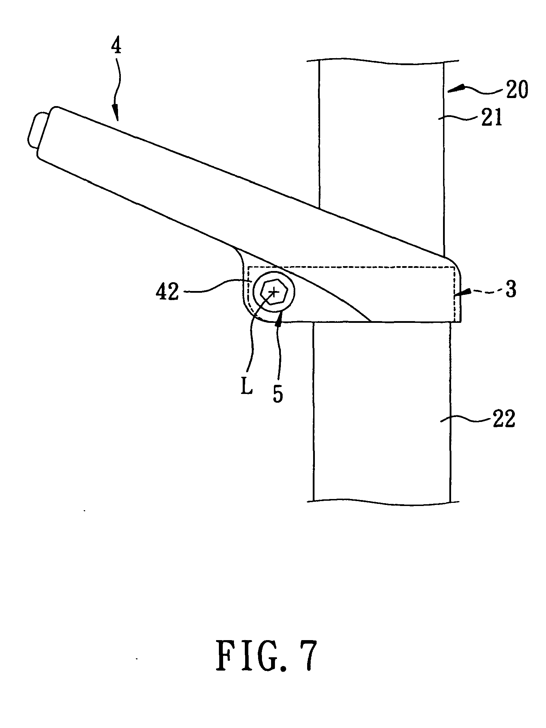

Referring to Figs. 4, 5, 6, and 7, the first preferred embodiment of a bicycle accessory device according to this invention is mounted to a seat tube assembly 20 of a bicycle frame that consisting of inner and outer tubes 21, 22. The inner tube 21 has a top end disposed above the outer tube 22 and supporting a seat (not shown) thereon. The bicycle accessory device includes a clamp 3, an accessory 4, and a fastening unit 5.

The clamp 3 includes a sleeve portion 31 sleeved on the outer tube 22 and having two adjacent ends, a first clamp ear 32 connected integrally to one of the ends of the sleeve portion 31, and a second clamp ear 33 connected integrally to the other of the ends of the sleeve portion 31. The sleeve portion 31 defines a tube-engaging hole 34 permitting extension of the outer tube 22 therethrough. The first and second clamp ears 33 define an opening 35 therebetween. The first clamp ear 32 is formed with a pivot hole 321. The second clamp ear 33 is formed with a threaded hole 331 aligned with the pivot hole 321 in the first clamp ear 32 along an axis (L). The pivot hole 321 in the first clamp ear 32 is configured as a counterbore, and has a large-diameter hole portion 321a and a small-diameter hole portion 321b connected to the large-diameter hole portion 321a and having a diameter smaller than that of the large-diameter hole portion 321a to define a shoulder 322 therebetween.

The accessory 4 is configured as a tail lamp, and has a body 41, as well as first and second accessory ears 42, 43. The first and second accessory ears 42, 43 constitute a connecting portion 44 for connection with the clamp 3. The first and second clamp ears 32, 33 are located between the first and second accessory ears 42, 43. The accessory 4 further has a hole 411 defined by an annular inner peripheral portion 412 and permitting the inner tube 21 to extend fittingly therethrough. As such, the annular inner peripheral portion 412 constitutes an abutment portion for contact with the inner tube 31 and a top end of the outer tube 22. The first accessory ear 42 is formed with a pivot hole 421. The second accessory ear 43 is formed with a threaded hole 431. The pivot hole 421 in the first accessory ear 42 and the threaded hole 431 in the second accessory ear 43 are aligned with the pivot hole 321 in the first clamp ear 32 and the threaded hole 331 in the second clamp ear 33 along the axis (L).

In this embodiment, the thickness of the first clamp ear 32 along the axis (L) is larger than that of the second clamp ear 33, and the thickness of the first accessory ear 42 along the axis (L) is smaller than that of the second accessory ear 43. The total thickness (D1) of the first clamp ear 32 and the first accessory ear 42 is the same as the total thickness (D2) of the second clamp ear 33 and the second accessory ear 43 to enhance the appearance of the accessory device.

The fastening unit 5 extends through the first and second clamp ears 32, 33 and the first and second accessory ears 42, 43 along the axis (L) so as to lock the clamp 3 and the accessory 4 on the seat tube assembly 20. The fastening unit 5 has a head 51 disposed within the large-diameter hole portion 321a of the pivot hole 321 in the first clamp ear 32 and abutting against the shoulder 322, and a threaded stem portion 52 extends through the small-diameter hole portion 321b of the pivot hole 321 in the first clamp ear 32 and the pivot hole 421 in the first accessory ear 42 to engage the threaded holes 331, 431 in the second clamp ear 33 and the second accessory ear 43. As such, the fastening unit 5 is operable to move the first and second clamp ears 32, 33 toward and away from each other. The axis (L) is oriented such that rotation of the accessory 4 about the axis (L) is prevented as a result of contact between the abutment portion of the accessory 4 and the inner and outer tubes 21, 22.

In view of the above, when the fastening unit 5 is loosened slightly after a period of use, since the accessory 4 is in contact with the inner tube 21 and a top end of the outer tube 22, pivoting and moving of the accessory 4 relative to the inner and outer tubes 21, 22 can be prevented. Thus, the object of this invention is achieved.

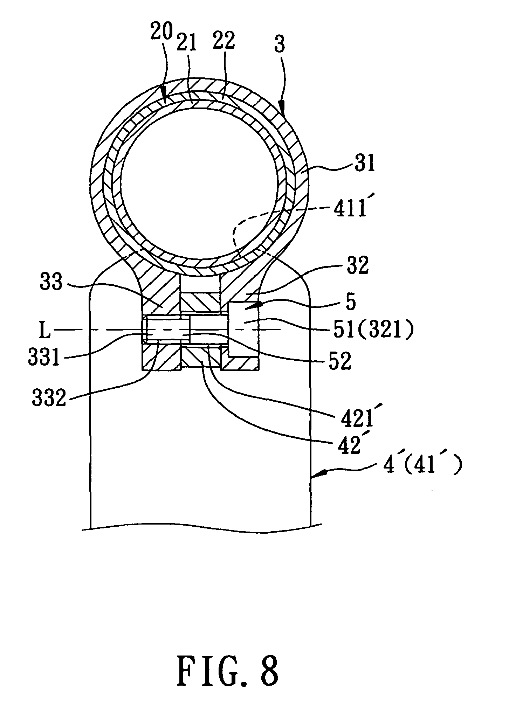

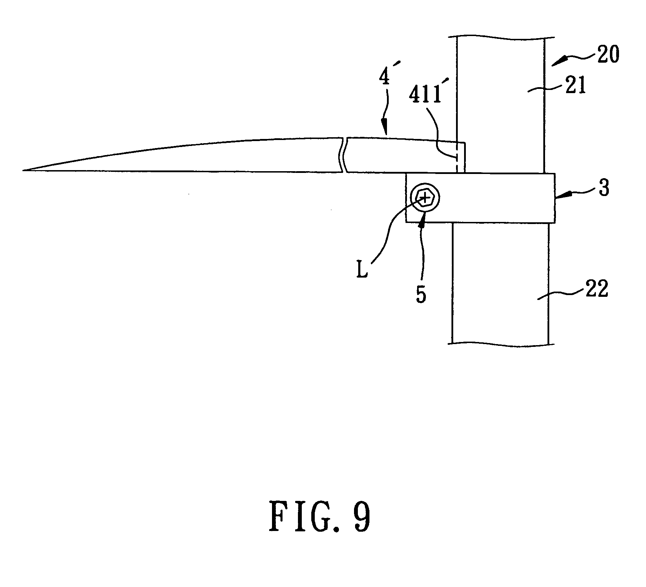

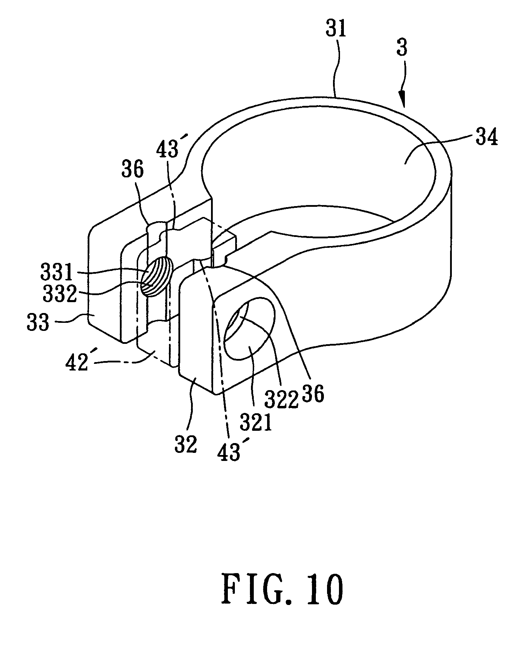

Figs. 8, 9, and 10 show the second preferred embodiment of a bicycle accessory device according to this invention, which is similar in construction to the first preferred embodiment. In this embodiment, the thickness of the first clamp ear 32 along the axis (L) is the same as that of the second clamp ear 33. The accessory 4' is configured as a mudguard, and has a body 41', and a connecting portion 42' configured as an insert block and located between the first and second clamp ears 32, 33. Each of the first clamp ear 32 and the connecting portion 42' is formed with a pivot hole 321, 421'. The second clamp ear 33 is formed with a threaded hole 331. The fastening unit 5 is configured as a lock bolt, and extends through the pivot holes 321, 421' in the first clamp ear 32 and the connecting portion 42' to engage the threaded hole 331 in the second clamp ear 33. The accessory 4' has an end constituting the abutment portion. The end of the accessory 4' has a curved end surface 411' in contact with an annular outer surface of the inner tube 21, and a bottom surface in contact with the top end of the outer tube 22. As such, when the fastening unit 5 is loosened slightly after a period of use, rotation of the accessory 4' can be prevented.

In this embodiment, each of the first and second clamp ears 32, 33 is formed with an engaging slot 36, and the connecting portion 42' is formed with two parallel engaging ribs 43' disposed respectively at two opposite sides thereof. The engaging ribs 43' of the connecting portion 42' engage respectively the engaging slots 36 in the first and second clamp ears 32, 33 so as to further prevent rotation of the accessory 4' about the axis (L). Thus, the second preferred embodiment can also achieve the object of this invention.

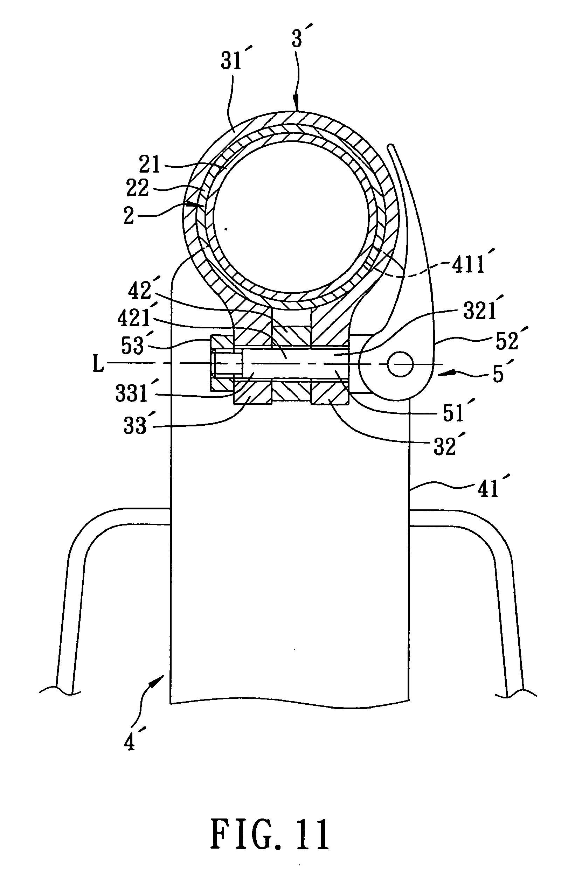

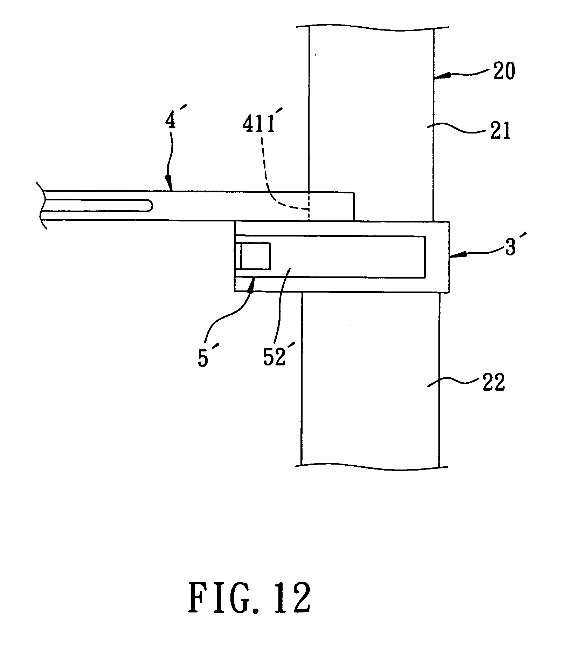

Figs. 11 and 12 show the third preferred embodiment of a bicycle accessory device according to this invention, which is similar in construction to the second preferred embodiment. Unlike the second preferred embodiment, the accessory 4' and the fastening unit 5' are configured respectively as a rear carrier rack and a quick release lock unit. The connecting portion 42' is formed with a pivot hole 421'.

The fastening unit 5' includes a stud 51' extending through the pivot holes 321, 421', 331' in the first clamp ear 32, the connecting portion 42', and the second clamp ear 33', an operation lever 52' connected pivotally to one end of the stud 51', and a nut 53' engaging the other end of the stud 51'. The operation lever 52' is operable to release the clamp 3' from the outer tube 22.

In this embodiment, no lock bolt is in contact with the inner and outer tubes 21, 22, and, thus, cannot damage the same.

## Claims

1. A bicycle accessory assembly adapted to be mounted to a bicycle frame, the bicycle frame having an inner tube (21) and an outer tube (22) sleeved on the inner tube (21), the inner tube (21) having a top end disposed above outer tube (22), the bicycle accessory assembly including:
a clamp (3) sleeved on an assembly of the inner and outer tubes (21, 22);
an accessory (4, 4'); and
a fastening unit (5) for fastening the accessory (4, 4') to the clamp (3) and locking the clamp (3) on the assembly of the inner and outer tubes (21, 22) ;
the clamp (3) including a sleeve portion (31) adapted to be sleeved on the outer tube (22) and having two adjacent ends, a first clamp ear (32) connected integrally to one of the ends of the sleeve portion (31), and a second clamp ear (33) connected integrally to the other of the ends of the sleeve portion (31);
the fastening unit (5) extending through the connecting portion (44, 42') of the accessory (4, 4') and the first and second clamp ears (32, 33) along an axis (L) so as to lock the clamp (3) and the accessory (4, 4' ) releaseably on an assembly of the inner and outer tubes (21, 22), the fastening unit (5) being operable to move the first clamp ear (32) toward and away from the second clamp ear (33);
**characterized by**:
the accessory (4, 4') having a body (41, 41'), a connecting portion (44, 42'), and an abutment portion (412) adapted to contact the inner tube (21) and a top end of the outer tube (22);
said axis (L) being oriented such that rotation of the accessory (4, 4') about the axis (L) is prevented as a result of contact between the abutment portion (412) of the accessory (4, 4') and the inner and outer tubes (21, 22).

2. The bicycle accessory assembly as claimed in Claim 1, **characterized in that** the connecting portion (44) has a first accessory ear (42) and a second accessory ear (43), the first and second clamp ears (32, 33) of the clamp (3) being located between the first and second accessory ears (42, 43), each of the first clamp ear (32) and the first accessory ear (42) being formed with a pivot hole (421), each of the second clamp ear (33) and the second accessory ear (43) being formed with a threaded hole (431), the fastening unit (5) being configures as a lock bolt and extending through the pivot holes (321) in the first accessory ear (42) and the first clamp ear (32) to engage the threaded holes (331, 431) in the second clamp ear (33) and the second accessory ear (43), the accessory (4) being formed with a hole (411) adapted for permitting the inner tube (21) to extend fittingly therethrough, the hole (411) in the accessory (4) being defined by an annular inner peripheral portion (412) constituting the abutment portion of the accessory (4).

3. The bicycle accessory assembly as claimed in Claim 2, further **characterized in that** the pivot hole (321) in the first clamp ear (32) is configured as a counterbore, and has a large-diameter hole portion (321a) and a small-diameter hole portion (321b) connected to the large-diameter hole portion (321a) and having a diameter smaller than that of the large-diameter hole portion (321a), the lock bolt (5) having a head (51) disposed within the large-diameter hole portion (321a), and a threaded stem portion (52) extending through the small-diameter hole portion (321b).

4. The bicycle accessory assembly as claimed in Claim 1, **characterized in that** the connecting portion (42') of the accessory (4') is configured as an insert block located between the first and second clamp ears (32, 33), each of the first clamp ear (32) and the insert block (42') being formed with a pivot hole (321), the second clamp ear (33) being formed with a threaded hole (331), the fastening unit (5) being configured as a lock bolt extending through the pivot holes (321) in the first clamp ear (32) and the insert block (42') to engage the threaded hole (331) in the second clamp ear (33).

5. The bicycle accessory assembly as claimed in Claim 4, further **characterized in that** the accessory (4') has an end constituting the abutment portion (412), the end of the accessory (4') having a curved end surface (411') adapted for contact with an annular outer surface of the inner tube (21), and a bottom surface adapted for contact with the top end of the outer tube (22).

6. The bicycle accessory assembly as claimed in Claim 4, further **characterized in that** each of the first and second clamp ears (32, 33) is formed with an engaging slot (36), the insert block (42') being formed with two parallel engaging ribs (43') disposed respectively at two opposite sides thereof, the engaging ribs (43') of the inert block engaging respectively the engaging slots (36) in the first and second clamp ears (32, 33) so as to further prevent rotation of the accessory (4) about the axis (L).

7. The bicycle accessory assembly as claimed in Claim 1, **characterized in that** the connecting portion (42') of the accessory (4') is configured as an insert block located between the first and second clamp ears (32, 33) , each of the fist and second clamp ears (32, 33) and the insert block (42') being formed with a pivot hole (321), the fastening unit (5) being configured as a quick release lock unit and including a stud (51') extending through the pivot holes (321, 421', 331') in the first and second clamp ears (32, 33) and the insert block (42'), an operation lever (52') connected pivotally to one end of the stud (51'), and a nut (53') engaging the other end of the stud (51'), the operation lever (52') being operable to release the clamp (3) from the outer tube (22).

8. The bicycle accessory assembly as claimed in any of Claims 1 to 7, **characterized in that** the accessory (4, 4') is one of a mudguard, a tail lamp, a rear carrier rack, and a tail lamp.

9. A bicycle comprising:
a bicycle frame having an inner tube (21) and an outer tube (22) sleeved on the inner tube (21), the inner tube (21) having a top end disposed above the outer tube (22) ;
a clamp (3) including a sleeve portion (31) sleeved on the outer tube (22) and having two adjacent ends, a first clamp ear (32) connected integrally to one of the ends of the sleeve portion (31), and a second clamp ear (33) connected integrally to the other of the ends of the sleeve portion (31) ;
a fastening unit (5) extending through the connecting portion (44, 42') of the accessory (4. 4') and the first and second clamp ears (32, 33) along an axis (L) so as to lock the clamp (3) and the accessory (4, 4') releaseably on an assembly of the inner and outer tubes (21, 22), the fastening unit (5) being operable to move the first clamp ear (32) toward and away from the second clamp ear (33) ; **characterised by**
an accessory (4, 4') having a body (41, 41'), a connecting portion (44, 42'), and an abutment portion (412) in contact with the inner tube (21) and a top end of the outer tube (22); and said axis (L) being oriented such that rotation of the accessory (4, 4') about the axis (L) is prevented as a result of contact between the abutment portion (412) of the accessory (4, 4') and the inner and outer tubes (21, 22).

10. The bicycle as claimed in Claim 9, further **characterized in that** the connecting portion (44) has a first accessory ear (42) and a second accessory ear (43), the first and second clamp ears (32, 33) of the clamp (3) being located between the first and second accessory ears (42, 43), each of the first clamp ear (32) and the first accessory ear (42) being formed with a pivot hole (421), each of the second clamp ear (33) and the second accessory ear (43) being formed with a threaded hole (431), the fastening unit (5) being configures as a lock bolt and extending through the pivot holes (321) in the first accessory ear (42) and the first clamp ear (32) to engage the threaded holes (331, 431) in the second clamp ear (33) and the second accessory ear (43), the accessory (4) being formed with a hole (411) permitting the inner tube (21) to extend fittingly therethrough, the hole (411) in the accessory (4) being defined by an annular inner peripheral portion (412) constituting the abutment portion (412) of the accessory (4).

11. The bicycle as claimed in Claim 10, further **characterized in that** the pivot hole (321) in the first clamp ear (32) is configured as a counterbore, and has a large-diameter hole portion (321a) and a small-diameter hole portion (321b) connected to the large-diameter hole portion (321a) and having a diameter smaller than that of the large-diameter hole portion (321a) , the lock bolt having a head (51) disposed within the large-diameter hole portion (321a), and a threaded stem portion (52) extending through the small-diameter hole portion (321b).

12. The bicycle as claimed in Claim 9, further **characterized in that** the connecting portion (42') of the accessory (4') is configured as an insert block located between the first and second clamp ears (32, 33), each of the first clamp ear (32) and the insert block (42') being formed with a pivot hole (321), the second clamp ear (33) being formed with a threaded hole (331), the fastening unit (5) being configured as a lock bolt extending through the pivot holes (321) in the first clamp ear (32) and the insert block (42') to engage the threaded hole (331) in the second clamp ear (33).

13. The bicycle as claimed in Claim 12, further **characterized in that** the accessory (4') has an end constituting the abutment portion (412), the end of the accessory (4') having a curved end surface (411') (411') in contact with an annular outer surface of the inner tube (21), and a bottom surface in contact with the top end of the outer tube (22).

14. The bicycle as claimed in Claim 12, further **characterized in that** each of the first and second clamp ears (32, 33) is formed with an engaging slot (36), the insert block (42') being formed with two parallel engaging ribs (43') disposed respectively at two opposite sides thereof, the engaging ribs (43') of the inert block engaging respectively the engaging slots (36) in the first and second clamp ears (32, 33) so as to further prevent rotation of the accessory (4') about the axis (L).

15. The bicycle as claimed in Claim 9, further **characterized in that** the connecting portion (42') of the accessory (4) is configured as an insert block located between the first and second clamp ears (32, 33), each of the fist and second clamp ears (32, 33) and the insert block (42') being formed with a pivot hole (321), the fastening unit (5) being configured as a quick release lock unit and including a stud (51') extending through the pivot holes (321, 421', 331') in the first and second clamp ears (32, 33) and the insert block (42'), an operation lever (52') connected pivotally to one end of the stud (51'), and a nut (53') engaging the other end of the stud (51'), the operation lever (52') being operable to release the clamp (3) from the outer tube (22).

16. The bicycle as claimed in any of Claims 9-15, further **characterized in that** the accessory (4, 4') is one of a mudguard, a tail lamp, a rear carrier rack, and a tail lamp.

## Patentansprüche

1. Fahrradzubehöranordnung, die so ausgelegt ist, dass sie auf einem Fahrradrahmen montiert werden kann, wobei der Fahrradrahmen ein inneres Rohr (21) und ein äußeres Rohr (22) aufweist, das auf das innere Rohr (21) geschoben ist, wobei das innere Rohr (21) ein oberes Ende aufweist, das über dem äußeren Rohr (22) angeordnet ist, und die Fahrradzubehöranordnung Folgendes umfasst:
eine Schelle (3), die auf eine Anordnung der inneren und äußeren Rohre (21, 22) geschoben ist;
ein Zubehörteil (4, 4');
eine Befestigungseinheit (5) zum Befestigen des Zubehörteils (4, 4') an der Schelle (3) und Arretieren der Schelle (3) auf der Anordnung der inneren und äußeren Rohre (21, 22);
wobei die Schelle (3) einen Hülsenabschnitt (31), der so ausgelegt ist, dass er auf das äußere Rohr (22) geschoben wird, und zwei benachbarte Enden aufweist, eine erste Schellenöse (32), die mit dem einen der Enden des Hülsenabschnitts (31) einstückig verbunden ist, und eine zweite Schellenöse (33) aufweist, die mit dem anderen der Enden des Hülsenabschnitts (31) einstückig verbunden ist;
wobei sich die Befestigungseinheit (5) entlang einer Achse (L) durch den Verbindungsabschnitt (44, 42') des Zubehörteils (4, 4') und die ersten und zweiten Schellenösen (32, 33) erstreckt, um die Schelle (3) und das Zubehörteil (4, 4') lösbar auf einer Anordnung der inneren und äußeren Rohre (21, 22) zu arretieren, und die Befestigungseinheit (5) so betätigt werden kann, dass sie die erste Schellenöse (32) zur zweiten Schellenöse (33) hin und davon weg bewegt;
**dadurch gekennzeichnet, dass**:
das Zubehörteil (4, 4') einen Körper (41, 41'), einen Verbindungsabschnitt (44, 42') und einen Widerlagerabschnitt (412) aufweist, der so ausgelegt ist, dass er mit dem inneren Rohr (21) und einem oberen Ende des äußeren Rohres (22) in Kontakt steht;
die Achse (L) derart ausgerichtet ist, dass eine Drehung des Zubehörteils (4, 4') um die Achse (L) infolge des Kontakts zwischen dem Widerlagerabschnitt (412) des Zubehörteils (4, 4') und den inneren und äußeren Rohren (21, 22) verhindert wird.

2. Fahrradzubehöranordnung nach Anspruch 1, **dadurch gekennzeichnet, dass** der Verbindungsabschnitt (44) eine erste Zubehörteilöse (42) und eine zweite Zubehörteilöse (43) aufweist, wobei sich die ersten und zweiten Schellenösen (32, 33) der Schelle (3) zwischen den ersten und zweiten Zubehörteilösen (42, 43) befinden, die erste Schellenöse (32) und die erste Zubehörteilöse (42) jeweils mit einem Stiftloch (421) ausgebildet sind, die zweite Schellenöse (33) und die zweite Zubehörteilöse (43) jeweils mit einem Gewindeloch (431) ausgebildet sind, die Befestigungseinheit (5) als ein Arretierbolzen ausgestaltet ist und sich durch die Stiftlöcher (321) in der ersten Zubehörteilöse (42) und der ersten Schellenöse (32) erstreckt, um in die Gewindelöcher (331, 431) in der zweiten Schellenöse (33) und der zweiten Zubehörteilöse (43) einzugreifen, das Zubehörteil (4) mit einem Loch (411) ausgebildet ist, das so ausgelegt ist, dass es dem inneren Rohr (21) ermöglicht, sich passgenau **dadurch** zu erstrecken, und das Loch (411) im Zubehörteil (4) durch einen ringförmigen Innenumfangsabschnitt (412) definiert ist, der den Widerlagerabschnitt des Zubehörteils (4) bildet.

3. Fahrradzubehöranordnung nach Anspruch 2, ferner **dadurch gekennzeichnet, dass** das Stiftloch (321) in der ersten Schellenöse (32) als eine Senkbohrung ausgestaltet ist und einen Lochabschnitt (321a) mit großem Durchmesser und einen Lochabschnitt (321b) mit kleinem Durchmesser aufweist, der mit dem Lochabschnitt (321a) mit großem Durchmesser verbunden ist und einen kleineren Durchmesser als der Lochabschnitt (321a) mit großem Durchmesser aufweist, wobei der Arretierbolzen (5) einen Kopf (51), der innerhalb des Lochabschnitts (321a) mit großem Durchmesser angeordnet ist, und einen Gewindeschaftabschnitt (52) aufweist, der sich durch den Lochabschnitt (321b) mit kleinem Durchmesser erstreckt.

4. Fahrradzubehöranordnung nach Anspruch 1, **dadurch gekennzeichnet, dass** der Verbindungsabschnitt (42') des Zubehörteils (4') als ein Einsatzblock ausgestaltet ist, der sich zwischen den ersten und zweiten Schellenösen (32, 33) befindet, wobei die erste Schellenöse (32) und der Einsatzblock (42') jeweils mit einem Stiftloch (321) ausgebildet sind, die zweite Schellenöse (33) mit einem Gewindeloch (331) ausgebildet ist, und die Befestigungseinheit (5) als ein Arretierbolzen ausgestaltet ist, der sich durch die Stiftlöcher (321) in der ersten Schellenöse (32) und im Einsatzblock (42') erstreckt, um in das Gewindeloch (331) in der zweiten Schellenöse (33) einzugreifen.

5. Fahrradzubehöranordnung nach Anspruch 4, ferner **dadurch gekennzeichnet, dass** das Zubehörteil (4') ein Ende aufweist, das den Widerlagerabschnitt (412) bildet, wobei das Ende des Zubehörteils (4') eine gekrümmte Endfläche (411'), die zum Kontakt mit einer ringförmigen Außenfläche des inneren Rohres (21) ausgelegt ist, und eine untere Fläche aufweist, die zum Kontakt mit dem oberen Ende des äußeren Rohres (22) ausgelegt ist.

6. Fahrradzubehöranordnung nach Anspruch 4, ferner **dadurch gekennzeichnet, dass** die ersten und zweiten Schellenösen (32, 33) jeweils mit einem Eingriffsschlitz (36) ausgebildet sind, der Einsatzblock (42') mit zwei parallelen Eingriffsrippen (43') ausgebildet ist, die jeweils an zwei gegenüberliegenden Seiten davon angeordnet sind, und die Eingriffsrippen (43') des Einsatzblocks jeweils in die Eingriffsschlitze (36) in den ersten und zweiten Schellenösen (32, 33) eingreifen, um ferner eine Drehung des Zubehörteils (4) um die Achse (L) zu verhindern.

7. Fahrradzubehöranordnung nach Anspruch 1, **dadurch gekennzeichnet, dass** der Verbindungsabschnitt (42') des Zubehörteils (4') als ein Einsatzblock ausgestaltet ist, der sich zwischen den ersten und zweiten Schellenösen (32, 33) befindet, wobei die ersten und zweiten Schellenösen (32, 33) und der Einsatzblock (42') jeweils mit einem Stiftloch (321) ausgebildet sind, die Befestigungseinheit (5) als eine Schnelllöse-Arretiereinheit ausgestaltet ist und einen Bolzen (51'), der sich durch die Stiftlöcher (321, 421', 331') in den ersten und zweiten Schellenösen (32, 33) und im Einsatzblock (42') erstreckt, einen Betätigungshebel (52'), der drehbar mit dem einen Ende des Bolzens (51') verbunden ist, und eine Mutter (53') aufweist, die in das andere Ende des Bolzens (51') eingreift, wobei der Betätigungshebel (52') so betätigt werden kann, dass er die Schelle (3) vom äußeren Rohr (22) löst.

8. Fahrradzubehöranordnung nach einem der Ansprüche 1 bis 7, **dadurch gekennzeichnet, dass** das Zubehörteil (4, 4') ein Schutzblech, eine Schlussleuchte oder ein hinteres Traggestell ist.

9. Fahrrad, aufweisend:
einen Fahrradrahmen, der ein inneres Rohr (21) und ein äußeres Rohr (22) aufweist, das auf das innere Rohr (21) geschoben ist, wobei das innere Rohr (21) ein oberes Ende aufweist, das über dem äußeren Rohr (22) angeordnet ist;
eine Schelle (3), die einen Hülsenabschnitt (31), der so ausgelegt ist, dass er auf das äußere Rohr (22) geschoben wird, und zwei benachbarte Enden aufweist, eine erste Schellenöse (32), die mit dem einen der Enden des Hülsenabschnitts (31) einstückig verbunden ist, und eine zweite Schellenöse (33) aufweist, die mit dem anderen der Enden des Hülsenabschnitts (31) einstückig verbunden ist;
eine Befestigungseinheit (5), die sich entlang einer Achse (L) durch den Verbindungsabschnitt (44, 42') des Zubehörteils (4, 4') und die ersten und zweiten Schellenösen (32, 33) erstreckt, um die Schelle (3) und das Zubehörteil (4, 4') lösbar auf einer Anordnung der inneren und äußeren Rohre (21, 22) zu arretieren, wobei die Befestigungseinheit (5) so betätigt werden kann, dass sie die erste Schellenöse (32) zur zweiten Schellenöse (33) hin und davon weg bewegt;
**dadurch gekennzeichnet, dass**:
ein Zubehörteil (4, 4') einen Körper (41, 41'), einen Verbindungsabschnitt (44, 42') und einen Widerlagerabschnitt (412) in Kontakt mit dem inneren Rohr (21) und einem oberen Ende des äußeren Rohres (22) aufweist; und
die Achse (L) derart ausgerichtet ist, dass eine Drehung des Zubehörteils (4, 4') um die Achse (L) infolge des Kontakts zwischen dem Widerlagerabschnitt (412) des Zubehörteils (4, 4') und den inneren und äußeren Rohren (21, 22) verhindert wird.

10. Fahrrad nach Anspruch 9, ferner **dadurch gekennzeichnet, dass** der Verbindungsabschnitt (44) eine erste Zubehörteilöse (42) und eine zweite Zubehörteilöse (43) aufweist, wobei sich die ersten und zweiten Schellenösen (32, 33) der Schelle (3) zwischen den ersten und zweiten Zubehörteilösen (42, 43) befinden, die erste Schellenöse (32) und die erste Zubehörteilöse (42) jeweils mit einem Stiftloch (421) ausgebildet sind, die zweite Schellenöse (33) und die zweite Zubehörteilöse (43) jeweils mit einem Gewindeloch (431) ausgebildet sind, die Befestigungseinheit (5) als ein Arretierbolzen ausgestaltet ist und sich durch die Stiftlöcher (321) in der ersten Zubehörteilöse (42) und der ersten Schellenöse (32) erstreckt, um in die Gewindelöcher (331, 431) in der zweiten Schellenöse (33) und der zweiten Zubehörteilöse (43) einzugreifen, das Zubehörteil (4) mit einem Loch (411) ausgebildet ist, das es dem inneren Rohr (21) ermöglicht, sich passgenau **dadurch** zu erstrecken, und das Loch (411) im Zubehörteil (4) durch einen ringförmigen Innenumfangsabschnitt (412) definiert ist, der den Widerlagerabschnitt (412) des Zubehörteils (4) bildet.

11. Fahrrad nach Anspruch 10, ferner **dadurch gekennzeichnet, dass** das Stiftloch (321) in der ersten Schellenöse (32) als eine Senkbohrung ausgestaltet ist und einen Lochabschnitt (321a) mit großem Durchmesser und einen Lochabschnitt (321b) mit kleinem Durchmesser aufweist, der mit dem Lochabschnitt (321a) mit großem Durchmesser verbunden ist und einen kleineren Durchmesser als der Lochabschnitt (321a) mit großem Durchmesser aufweist, wobei der Arretierbolzen einen Kopf (51), der innerhalb des Lochabschnitts (321a) mit großem Durchmesser angeordnet ist, und einen Gewindeschaftabschnitt (52) aufweist, der sich durch den Lochabschnitt (321b) mit kleinem Durchmesser erstreckt.

12. Fahrrad nach Anspruch 9, ferner **dadurch gekennzeichnet, dass** der Verbindungsabschnitt (42') des Zubehörteils (4') als ein Einsatzblock ausgestaltet ist, der sich zwischen den ersten und zweiten Schellenösen (32, 33) befindet, wobei die erste Schellenöse (32) und der Einsatzblock (42') jeweils mit einem Stiftloch (321) ausgebildet sind, die zweite Schellenöse (33) mit einem Gewindeloch (331) ausgebildet ist, und die Befestigungseinheit (5) als ein Arretierbolzen ausgestaltet ist, der sich durch die Stiftlöcher (321) in der ersten Schellenöse (32) und im Einsatzblock (42') erstreckt, um in das Gewindeloch (331) in der zweiten Schellenöse (33) einzugreifen.

13. Fahrrad nach Anspruch 12, ferner **dadurch gekennzeichnet, dass** das Zubehörteil (4') ein Ende aufweist, das den Widerlagerabschnitt (412) bildet, wobei das Ende des Zubehörteils (4') eine gekrümmte Endfläche (411') in Kontakt mit einer ringförmigen Außenfläche des inneren Rohres (21) und eine untere Fläche in Kontakt mit dem oberen Ende des äußeren Rohres (22) aufweist.

14. Fahrrad nach Anspruch 12, ferner **dadurch gekennzeichnet, dass** die ersten und zweiten Schellenösen (32, 33) jeweils mit einem Eingriffsschlitz (36) ausgebildet sind, der Einsatzblock (42') mit zwei parallelen Eingriffsrippen (43') ausgebildet ist, die jeweils an zwei gegenüberliegenden Seiten davon angeordnet sind, und die Eingriffsrippen (43') des Einsatzblocks jeweils in die Eingriffsschlitze (36) in den ersten und zweiten Schellenösen (32, 33) eingreifen, um ferner eine Drehung des Zubehörteils (4') um die Achse (L) zu verhindern.

15. Fahrrad nach Anspruch 9, ferner **dadurch gekennzeichnet, dass** der Verbindungsabschnitt (42') des Zubehörteils (4) als ein Einsatzblock ausgestaltet ist, der sich zwischen den ersten und zweiten Schellenösen (32, 33) befindet, wobei die ersten und zweiten Schellenösen (32, 33) und der Einsatzblock (42') jeweils mit einem Stiftloch (321) ausgebildet sind, die Befestigungseinheit (5) als eine Schnelllöse-Arretiereinheit ausgestaltet ist und einen Bolzen (51'), der sich durch die Stiftlöcher (321, 421', 331') in den ersten und zweiten Schellenösen (32, 33) und im Einsatzblock (42') erstreckt, einen Betätigungshebel (52'), der drehbar mit dem einen Ende des Bolzens (51') verbunden ist, und eine Mutter (53') aufweist, die in das andere Ende des Bolzens (51') eingreift, wobei der Betätigungshebel (52') so betätigt werden kann, dass er die Schelle (3) vom äußeren Rohr (22) löst.

16. Fahrrad nach einem der Ansprüche 9 bis 15, **dadurch gekennzeichnet, dass** das Zubehörteil (4, 4') ein Schutzblech, eine Schlussleuchte oder ein hinteres Traggestell ist.

## Revendications

1. Ensemble d'accessoire de bicyclette prévu pour être monté sur un cadre de bicyclette, le cadre de bicyclette ayant un tube interne (21) et un tube externe (22) emmanché sur le tube interne (21), le tube interne (21) ayant une extrémité supérieure disposée au-dessus du tube externe (22), l'ensemble d'accessoire de bicyclette comportant :
un clip (3) emmanché sur un ensemble des tubes interne et externe (21, 22) ;
un accessoire (4, 4') ; et
une unité de fixation (5) pour fixer l'accessoire (4, 4') au clip (3) et pour verrouiller le clip (3) sur l'ensemble des tubes interne et externe (21, 22) ; le clip (3) comportant une portion de douille (31) prévue pour être emmanchée sur le tube externe (22) et ayant deux extrémités adjacentes, une première oreille de clip (32) connectée intégralement à l'une des extrémités de la portion de douille (31), et une deuxième oreille de clip (33) connectée intégralement à l'autre des extrémités de la portion de douille (31) ; l'unité de fixation (5) s'étendant à travers la portion de connexion (44, 42') de l'accessoire (4, 4') et les première et deuxième oreilles de clip (32, 33) le long d'un axe (L) de manière à verrouiller le clip (3) et l'accessoire (4, 4') de manière amovible sur un ensemble des tubes interne et externe (21, 22), l'unité de fixation (5) pouvant être actionnée pour déplacer la première oreille de clip (32) vers et depuis la deuxième oreille de clip (33) ;
**caractérisé par** :
l'accessoire (4, 4') ayant un corps (41, 41'), une portion de connexion (44, 42') et une portion de butée (412) prévue pour venir en contact avec le tube interne (21) et une extrémité supérieure du tube externe (22) ; ledit axe (L) étant orienté de telle sorte que la rotation de l'accessoire (4, 4') autour de l'axe (L) soit empêchée du fait du contact entre la portion de butée (412) de l'accessoire (4, 4') et les tubes interne et externe (21, 22).

2. Ensemble d'accessoire de bicyclette selon la revendication 1, **caractérisé en ce que** la portion de connexion (44) a une première oreille d'accessoire (42) et une deuxième oreille d'accessoire (43), la première et la deuxième oreille de clip (32, 33) du clip (3) étant situées entre la première et la deuxième oreille d'accessoire (42, 43), chacune de la première oreille de clip (32) et de la première oreille d'accessoire (42) étant formée avec un trou de pivot (421), chacune de la deuxième oreille de clip (33) et de la deuxième oreille d'accessoire (43) étant formée avec un trou fileté (431), l'unité de fixation (5) étant configurée sous forme d'un boulon de verrouillage et s'étendant à travers les trous de pivot (321) dans la première oreille d'accessoire (42) et la première oreille de clip (32) pour s'engager avec les trous filetés (331, 431) dans la deuxième oreille de clip (33) et la deuxième oreille d'accessoire (43), l'accessoire (4) étant formé avec un trou (411) prévu pour permettre au tube interne (21) de s'étendre étroitement à travers lui, le trou (411) dans l'accessoire (4) étant défini par une portion périphérique annulaire interne (412) constituant la portion de butée de l'accessoire (4).

3. Ensemble d'accessoire de bicyclette selon la revendication 2, **caractérisé en outre en ce que** le trou de pivot (321) dans la première oreille de clip (32) est configuré sous forme de trou à épaulement intérieur, et a une portion de trou de grand diamètre (321a) et une portion de trou de petit diamètre (321b) connectée à la portion de trou de grand diamètre (321a) et ayant un diamètre plus petit que celui de la portion de trou de grand diamètre (321a), le boulon de verrouillage (5) ayant une tête (51) disposée à l'intérieur de la portion de trou de grand diamètre (321a), et une portion de tige filetée (52) s'étendant à travers la portion de trou de petit diamètre (321b).

4. Ensemble d'accessoire de bicyclette selon la revendication 1, **caractérisé en ce que** la portion de connexion (42') de l'accessoire (4') est configurée sous la forme d'un bloc d'insert situé entre les première et deuxième oreilles de clip (32, 33), chacun de la première oreille de clip (32) et du bloc d'insert (42') étant formé avec un trou de pivot (321), la deuxième oreille de clip (33) étant formée avec un trou fileté (331), l'unité de fixation (5) étant configurée sous forme d'un boulon de verrouillage s'étendant à travers les trous de pivot (321) dans la première oreille de clip (32) et le bloc d'insert (42') de manière à s'engager avec le trou fileté (331) dans la deuxième oreille de clip (33).

5. Ensemble d'accessoire de bicyclette selon la revendication 4, **caractérisé en outre en ce que** l'accessoire (4') a une extrémité constituant la portion de butée (412), l'extrémité de l'accessoire (4') ayant une surface d'extrémité courbe (411') prévue pour venir en contact avec une surface externe annulaire du tube interne (21), et une surface inférieure prévue pour venir en contact avec l'extrémité supérieure du tube externe (22).

6. Ensemble d'accessoire de bicyclette selon la revendication 4, **caractérisé en outre en ce que** chacune de la première et de la deuxième oreille de clip (32, 33) est formée avec une fente d'engagement (36), le bloc d'insert (42') étant formé avec deux nervures d'engagement parallèles (43') disposées respectivement au niveau de deux côtés opposés de celui-ci, les nervures d'engagement (43') du bloc d'insert s'engageant respectivement avec les fentes d'engagement (36) dans les première et deuxième oreilles de clip (32, 33) de manière à empêcher davantage la rotation de l'accessoire (4) autour de l'axe (L).

7. Ensemble d'accessoire de bicyclette selon la revendication 1, **caractérisé en ce que** la portion de connexion (42') de l'accessoire (4') est configurée sous la forme d'un bloc d'insert situé entre les première et deuxième oreilles de clip (32, 33), chacun des première et deuxième oreilles de clip (32, 33) et du bloc d'insert (42') étant formé avec un trou de pivot (321), l'unité de fixation (5) étant configurée sous la forme d'une unité de verrouillage à déverrouillage rapide et comportant un goujon (51') s'étendant à travers les trous de pivot (321, 421', 331') dans les première et deuxième oreilles de clip (32, 33) et le bloc d'insert (42'), un levier fonctionnel (52') connecté de manière pivotante à une extrémité du goujon (51') et un écrou (53') s'engageant avec l'autre extrémité du goujon (51'), le levier fonctionnel (52') pouvant être actionné pour libérer le clip (3) du tube externe (22).

8. Ensemble d'accessoire de bicyclette selon l'une quelconque des revendications 1 à 7, **caractérisé en ce que** l'accessoire (4, 4') est un garde-boue, une lampe arrière ou un porte-bagage arrière.

9. Bicyclette comprenant :
un cadre de bicyclette ayant un tube interne (21) et un tube externe (22) emmanché sur le tube interne (21), le tube interne (21) ayant une extrémité supérieure disposée au-dessus du tube externe (22) ;
un clip (3) comportant une portion de douille (31) emmanchée sur le tube externe (22) et ayant deux extrémités adjacentes, une première oreille de clip (32) connectée intégralement à l'une des extrémités de la portion de douille (31) et une deuxième oreille de clip (33) connectée intégralement à l'autre des extrémités de la portion de douille (31) ;
une unité de fixation (5) s'étendant à travers la portion de connexion (44, 42') de l'accessoire (4, 4') et les première et deuxième oreilles de clip (32, 33) le long d'un axe (L) de manière à verrouiller le clip (3) et l'accessoire (4, 4') de manière amovible sur un ensemble des tubes interne et externe (21, 22), l'unité de fixation (5) pouvant être actionnée pour déplacer la première oreille de clip (32) vers et depuis la deuxième oreille de clip (33) ; **caractérisée par** :
un accessoire (4, 4') ayant un corps (41, 41'), une portion de connexion (44, 42') et une portion de butée (412) en contact avec le tube interne (21) et une extrémité supérieure du tube externe (22) ; et
ledit axe (L) étant orienté de telle sorte que la rotation de l'accessoire (4, 4') autour de l'axe (L) soit empêchée du fait du contact entre la portion de butée (412) de l'accessoire (4, 4') et les tubes interne et externe (21, 22).

10. Bicyclette selon la revendication 9, **caractérisée en outre en ce que** la portion de connexion (44) a une première oreille d'accessoire (42) et une deuxième oreille d'accessoire (43), la première et la deuxième oreille de clip (32, 33) du clip (3) étant situées entre la première et la deuxième oreille d'accessoire (42, 43), chacune de la première oreille de clip (32) et de la première oreille d'accessoire (42) étant formée avec un trou de pivot (421), chacune de la deuxième oreille de clip (33) et de la deuxième oreille d'accessoire (43) étant formée avec un trou fileté (431), l'unité de fixation (5) étant configurée sous forme d'un boulon de verrouillage et s'étendant à travers les trous de pivot (321) dans la première oreille d'accessoire (42) et la première oreille de clip (32) pour s'engager avec les trous filetés (331, 431) dans la deuxième oreille de clip (33) et la deuxième oreille d'accessoire (43), l'accessoire (4) étant formé avec un trou (411) permettant au tube interne (21) de s'étendre étroitement à travers lui, le trou (411) dans l'accessoire (4) étant défini par une portion périphérique annulaire interne (412) constituant la portion de butée (412) de l'accessoire (4).

11. Bicyclette selon la revendication 10, **caractérisée en outre en ce que** le trou de pivot (321) dans la première oreille de clip (32) est configuré sous forme de trou à épaulement intérieur, et a une portion de trou de grand diamètre (321a) et une portion de trou de petit diamètre (321b) connectée à la portion de trou de grand diamètre (321a) et ayant un diamètre plus petit que celui de la portion de trou de grand diamètre (321a), le boulon de verrouillage (5) ayant une tête (51) disposée à l'intérieur de la portion de trou de grand diamètre (321a), et une portion de tige filetée (52) s'étendant à travers la portion de trou de petit diamètre (321b).

12. Bicyclette selon la revendication 9, **caractérisée en outre en ce que** la portion de connexion (42') de l'accessoire (4') est configurée sous la forme d'un bloc d'insert situé entre les première et deuxième oreilles de clip (32, 33), chacun de la première oreille de clip (32) et du bloc d'insert (42') étant formé avec un trou de pivot (321), la deuxième oreille de clip (33) étant formée avec un trou fileté (331), l'unité de fixation (5) étant configurée sous forme d'un boulon de verrouillage s'étendant à travers les trous de pivot (321) dans la première oreille de clip (32) et le bloc d'insert (42') de manière à s'engager avec le trou fileté (331) dans la deuxième oreille de clip (33).

13. Bicyclette selon la revendication 12, **caractérisée en outre en ce que** l'accessoire (4') a une extrémité constituant la portion de butée (412), l'extrémité de l'accessoire (4') ayant une surface d'extrémité courbe (411') en contact avec une surface externe annulaire du tube interne (21), et une surface inférieure en contact avec l'extrémité supérieure du tube externe (22).

14. Bicyclette selon la revendication 12, **caractérisée en outre en ce que** chacune de la première et de la deuxième oreille de clip (32, 33) est formée avec une fente d'engagement (36), le bloc d'insert (42') étant formé avec deux nervures d'engagement parallèles (43') disposées respectivement au niveau de deux côtés opposés de celui-ci, les nervures d'engagement (43') du bloc d'insert s'engageant respectivement avec les fentes d'engagement (36) dans les première et deuxième oreilles de clip (32, 33) de manière à empêcher davantage la rotation de l'accessoire (4) autour de l'axe (L).

15. Bicyclette selon la revendication 9, **caractérisée en outre en ce que** la portion de connexion (42') de l'accessoire (4') est configurée sous la forme d'un bloc d'insert situé entre les première et deuxième oreilles de clip (32, 33), chacun des première et deuxième oreilles de clip (32, 33) et du bloc d'insert (42') étant formé avec un trou de pivot (321), l'unité de fixation (5) étant configurée sous la forme d'une unité de verrouillage à déverrouillage rapide et comportant un goujon (51') s'étendant à travers les trous de pivot (321, 421', 331') dans les première et deuxième oreilles de clip (32, 33) et le bloc d'insert (42'), un levier fonctionnel (52') connecté de manière pivotante à une extrémité du goujon (51') et un écrou (53') s'engageant avec l'autre extrémité du goujon (51'), le levier fonctionnel (52') pouvant être actionné pour libérer le clip (3) du tube externe (22).

16. Bicyclette selon l'une quelconque des revendications 9 à 15, **caractérisée en outre en ce que** l'accessoire (4, 4') est un garde-boue, une lampe arrière ou un porte-bagage arrière.
